# EUROPEAN PATENT APPLICATION

(11) **EP 4 089 605 A1**
(43) Date of publication of application: **16.11.2022**
(21) Application number: 20912248.0
(22) Date of filing: 04.12.2020
(51) Int. Cl.: G06Q 10/10, H04N 7/15, G06N 20/00, G06F 13/00

(54) **COMMUNICATION ASSISTANCE SYSTEM AND COMMUNICATION ASSISTANCE PROGRAM**

(30) Priority: 10.01.2020 JP 2020003108
(71) Applicant: SUMITOMO ELECTRIC INDUSTRIES, LTD., Osaka-shi, Osaka 541-0041 (JP)
(72) Inventor: OKINA, Yuna, Osaka-shi, Osaka 541-0041 (JP); DAI, Guiming, Osaka-shi, Osaka 541-0041 (JP); KAKII, Toshiaki, Osaka-shi, Osaka 541-0041 (JP); HOSOYA, Toshifumi, Osaka-shi, Osaka 541-0041 (JP)
(74) Representative: Boult Wade Tennant LLP
(86) International application number: PCT/JP2020/045301
(87) International publication number: WO 2021/140799

(57) **Abstract**

A communication assistance system according to one embodiment is a communication assistance system assisting communication performed by a user using a terminal, the communication assistance system includes a control data configured to generate unit generating control data for controlling a movement of an avatar of the user that is displayed on the terminal and participates in the communication, based on video data including voice data of the user and image data of the user, when there is a deficiency of image information in the image data of the user, the control data generating unit supplements a deficient image information by using the voice data of the user and a learned model, and the learned model is a learned model generated by using training data such that the control data of the avatar is output when the voice data of the user is input.

## Description

### Technical Field

One aspect of the present disclosure relates to a communication assistance system and a communication assistance program.

This application claims priority based on Japanese Patent Application No. 2020-003108 filed on January 10, 2020, and incorporates all the contents described in the Japanese patent application.

### Background Art

Regarding communication using a computer, for example, Japanese Unexamined Patent Publication No. 2009-077380 (Patent Literature 1) discloses a conference system correcting a non-verbal behavior movement such as contemplation and a gesture, among avatar movements corresponding to user movements, to another movement from the viewpoint of cultural appropriateness.

### Citation List

### Patent Literature

Patent Literature 1: Japanese Unexamined Patent Publication No. 2009-077380

### Summary of Invention

A communication assistance system according to one aspect of the present disclosure is a communication assistance system assisting communication performed by a user using a terminal, the communication assistance system includes a control data generating unit configured to generate control data for controlling a movement of an avatar of the user that is displayed on the terminal and participates in the communication, based on video data including voice data of the user and image data of the user, when there is a deficiency of image information in the image data of the user, the control data generating unit supplements a deficient image information by using the voice data of the user and a learned model, and the learned model is a learned model generated by using training data such that the control data of the avatar is output when the voice data of the user is input.

### Brief Description of Drawings

FIG. 1 is a diagram illustrating an example of a schematic configuration of a communication assistance system according to an embodiment.
FIG. 2 is a diagram illustrating an example of communication to be provided by the communication assistance system according to the embodiment.
FIG. 3 is a diagram illustrating an example of functional blocks of a terminal and a server.
FIG. 4A is a diagram illustrating a state where the entire image of a user corresponding to a predetermined frame is deficient.
FIG. 4B is a diagram illustrating a state where image data of a part of a face of the user is deficient in the image of the user corresponding to the predetermined frame.
FIG. 4C is a diagram illustrating an example of a movement of an avatar, on the basis of the image data of FIG. 4A or FIG. 4B.
FIG. 5 is a sequence diagram illustrating an example of processing to be executed in the communication assistance system.

### Description of Embodiments

### [Problems to be Solved by Present Disclosure]

In order to reflect a user movement, an avatar movement is controlled on the basis of video data of a user, that is, voice data and image data of the user. In this case, the avatar movement stops when there is a deficiency such as frame dropping in the image data, which is a problem. Regarding such a problem, no study is conducted in Patent Literature 1.

### [Effects of Present Disclosure]

According to one aspect of the present disclosure, even in a case where there is a deficiency in the image data of the user, the movement of the avatar can be continued.

### [Description of Embodiment of Present Disclosure]

First, an embodiment of the present disclosure will be described by being listed. A part of the following embodiment may be arbitrarily combined.

A communication assistance system according to one aspect of the present disclosure is a communication assistance system assisting communication performed by a user using a terminal, the communication assistance system includes a control data generating unit configured to generate control data for controlling a movement of an avatar of the user that is displayed on the terminal and participates in the communication, based on video data including voice data of the user and image data of the user, when there is a deficiency of image information in the image data of the user, the control data generating unit supplements a deficient image information by using the voice data of the user and a learned model, and the learned model is a learned model generated by using training data such that the control data of the avatar is output when the voice data of the user is input.

A communication assistance program according to one aspect of the present disclosure operates a computer as the communication assistance system described above.

In such an aspect, since the avatar is controlled even in a case where there is the deficiency of the image information in the image data of the user, the movement of the avatar can be continued.

The learned model may be a learned model generated by using at least a part of the image data of the user, the voice data of the user, and training data so as to output the image data of the user in which the image information corresponding to the deficiency is supplemented. When there is the deficiency of the image information in the image data of the user, the control data generating unit may generate the control data for controlling the avatar by using at least a part of the image data of the user, the voice data of the user, and the learned model. Accordingly, for example, even in a case where there is the deficiency of the image information in the image data of the user, the avatar can be controlled.

The deficiency of the image information may indicate a state in which the image information is not included in at least one unit frame. Accordingly, even in a case where the image information is not included in the unit frame, the avatar can be controlled.

The deficiency of the image information may be a deficiency of image information of a part of a face of the user. The control data may include control data for controlling a facial expression of the avatar. Accordingly, even in a case where there is no image information of a part of the face of the user, the facial expression of the avatar can be controlled.

When there is a deficiency in the voice data of the user, the control data generating unit may supplement a deficient voice data. Accordingly, even in a case where there is the deficiency in the voice data, the movement of the avatar can be continued.

Hereinafter, an embodiment in the present disclosure will be described in detail with reference to the attached drawings. In the description of the drawings, the same reference numerals will be applied to the same or equivalent elements, and the repeated description will be omitted.

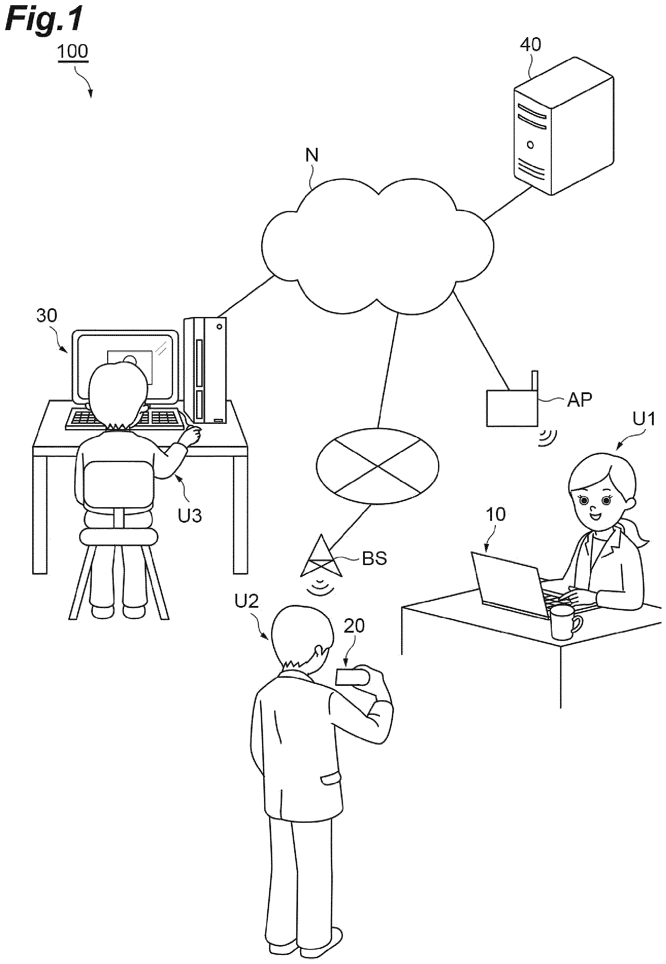

FIG. 1 is a diagram illustrating an example of a schematic configuration of a communication assistance system (hereinafter, may be simply referred to as a "system") according to an embodiment. A system 100 is a computer system assisting communication. Examples of the communication include a video conference, chatting, medical examination, counseling, an interview (character evaluation), telework, and the like.

The system 100 includes a terminal 10, a terminal 20, and a terminal 30. In the example illustrated in FIG. 1, the terminal 10 is a laptop type personal computer (PC) that is used by a user U1. The terminal 20 is a mobile phone (a smart phone or the like) that is used by a user U2. The terminal 30 is a desktop type PC that is used by a user U3. The terminal 10, the terminal 20, and the terminal 30 can be connected to a network N. In this example, the terminal 10 is connected to the network N through an access point AP, the terminal 20 is connected to the network N through a base station BS, and the terminal 30 is connected to the network N by wire (not illustrated). As the terminal 10, the terminal 20, and the terminal 30, a tablet terminal, a wearable terminal, a head-mounted display (HMD) terminal, and various other terminals may be used, in addition to the PC and the mobile phone described above. The number of terminals included in the system 100 is not limited to the example of FIG. 1.

The system 100 includes a server 40. The server 40 is connected to the network N. Therefore, the terminal 10, the terminal 20, the terminal 30, and the server 40 are capable of communicating with each other through the network N. The number of servers included in the system 100 is not limited to the example of FIG. 1.

The configuration of the network N is not limited. For example, the network N may be configured by including the internet (a public network), a communication carrier network, a provider network, and the like.

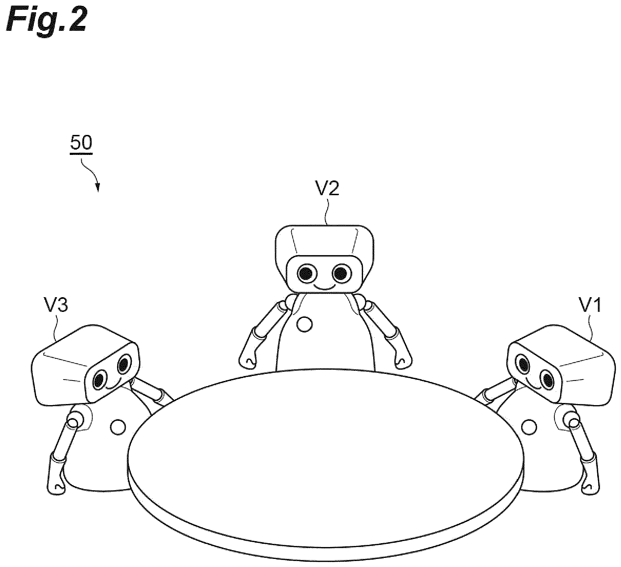

FIG. 2 is a diagram illustrating an example of communication to be provided by the system 100. The communication is performed in a virtual space 50 that is expressed by the computer. The virtual space 50 is presented to the user U1, the user U2, and the user U3 by being displayed on the terminal 10, the terminal 20, and the terminal 30.

In this embodiment, an avatar V1 of the user U1, an avatar V2 of the user U2, and an avatar V3 of the user U3 appear in the virtual space 50 as participants of the communication.

The avatar V1 is the alter ego of the user U1 that is expressed in the virtual space 50, and is generated by an image material independent from the actual image (imaging data or the like) of the user U1. The avatar V1 may be the alter ego of the user U1 in the virtual space 50 on the network N. The image material may be a material for generating an animation character, or may be a material for generating a realistic user image that is prepared in advance on the basis of the picture of the user U1, or the like. The avatar V1 may be drawn by two-dimensional or three-dimensional computer graphic (CG). The attribute of the avatar V1, for example, includes the dress, the hair, the age, the gender, the beauty or ugliness (for example, pretty, normal, not pretty, and the like), and the like of the avatar. The avatar V1 may be freely selected and set by the user U1 including the attribute. The same applies to the avatar V2 and the user U2, and the avatar V3 and the user U3.

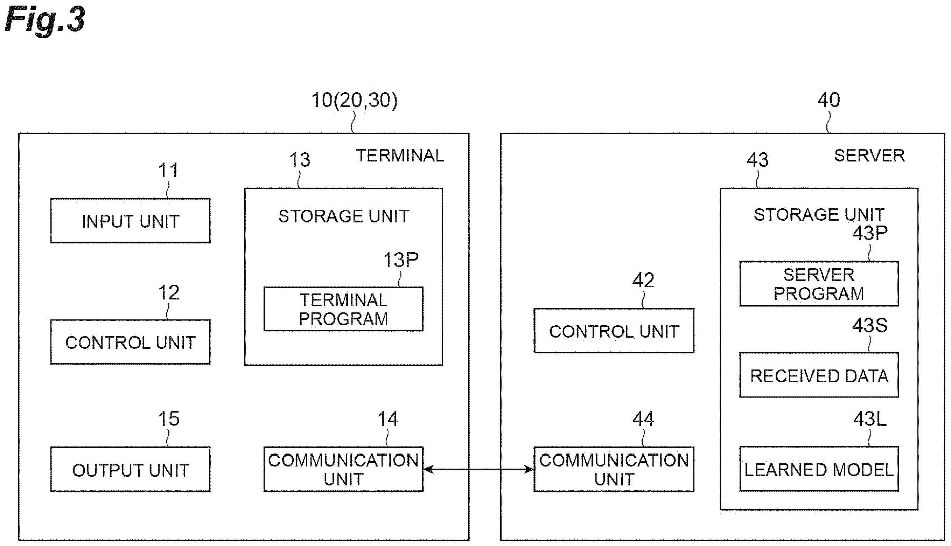

FIG. 3 is a diagram illustrating an example of functional blocks of the terminal 10, the terminal 20, the terminal 30, and the server 40. Since the functional blocks of the terminal 20 and the terminal 30 are identical to the functional block of the terminal 10, hereinafter, the terminal 10 and the server 40 will be described. First, the terminal 10 will be described, and then, the server 40 will be described.

The terminal 10 includes an input unit 11. The input unit 11 is a unit to which the video of the user U1 is input. The video of the user U1 includes the voice and the image of the user U1.

The terminal 10 includes a control unit 12. The control unit 12 is a unit that generates video data of the user U1. The video data of the user U1 is generated on the basis of the video of the user U1 that is input to the input unit 11. The video data is capable of including voice data and image data that can be separated from each other. The image data includes a plurality of consecutive unit frames. In general, the unit frame includes image information of the user U1. For example, the image data of 60 frames/second includes 60 unit frames per one second. The control unit 12 may encode and multiplex the voice data and the frame image data to be compatible with the communication through the network N.

The control unit 12 is a unit that controls the avatar V1, the avatar V2, and the avatar V3. The control of the avatar V1, the avatar V2, and the avatar V3 includes the control of the movement of the avatar V1, the avatar V2, and the avatar V3. Here, among a verbal behavior and a non-verbal behavior, the movement includes at least the non-verbal behavior. The verbal behavior is a behavior using a language, and is speech (utterance) and the like. The non-verbal behavior is a behavior not using a language, and for example, is a visual line (a visual line movement), a posture, a gesture, a facial expression, and the like. Examples of the posture or the movement of the face include nodding, head bobbing, head tilting, and the like. Examples of the posture or the movement of the upper body include a body direction, shoulder twisting, elbow bending, hand raising and lowering, and the like. Examples of the motion of the finger include extension, bending, abduction, adduction, and the like. Examples of the facial expression include indifference, delight, contempt, hate, scare, surprise, sadness, anger, and the like. The avatar V1, the avatar V2, and the avatar V3 are controlled on the basis of the corresponding control data. The control data is generated by the server 40 as described below.

The control unit 12 is a unit that generates video data of the virtual space 50. The video data of the virtual space 50 includes the video data of the avatar V1, the avatar V2, and the avatar V3 that are controlled on the basis of the control data. In addition, various objects appearing in the virtual space 50 may be included in the video data of the virtual space 50. Examples of the object include chairs, a table, and other ornaments, which are provided in a conference room, a conference document, a screen showing the document, and the like.

The terminal 10 includes a storage unit 13. The storage unit 13 is a unit that stores information required for the control (processing) of the terminal 10. In FIG. 3, a terminal program 13P is exemplified as the information to be stored in the storage unit 13. The terminal program 13P is a program for operating the terminal 10, and operates the computer such that the control by the control unit 12 or the like is executed. Since the system 100 is the communication assistance system, the terminal program 13P can also be referred to as a communication assistance program.

The terminal 10 includes a communication unit 14. The communication unit 14 is a unit that communicates with an external device of the terminal 10 through the network N (FIG. 1). Examples of the external device of the terminal 10 include the terminal 20, the terminal 30, and the server 40. The communication unit 14 transmits the video data that is generated by the control unit 12 to the server 40, or receives the control data of the avatar V1, the avatar V2, and the avatar V3 from the server 40.

The terminal 10 includes an output unit 15. The output unit 15 outputs the video of the virtual space 50. The video of the virtual space 50 is a video based on the video data of the virtual space 50 that is generated by the control unit 12.

The server 40 includes a control unit 42. The control unit 42 is a unit (a control data generating unit) that generates control data for controlling the avatar V1, the avatar V2, and the avatar V3. The control data of the avatar V1 is generated on the basis of the video data of the user U1. The control data of the avatar V2 is generated on the basis of the video data of the user U2. The control data of the avatar V3 is generated on the basis of the video data of the user U3. The control unit 42 may determine patterns corresponding to the non-verbal behaviors of the user U1, the user U2, and the user U3 by analyzing the image data that is separated from the video data. An image pattern may be selected from a finite number of given patterns stored in advance in a storage unit 43. In this case, since an infinite non-verbal behavior is grouped (sorted) to the finite number of patterns, the volume of the control data of the avatar V1, the avatar V2, and the avatar V3, and a communication load are reduced. In the control data, for example, the non-verbal behavior may be described in a JavaScript <Registered Trademark> object notation (JSON) format. As the voice data of the avatar V1, the avatar V2, and the avatar V3, the voice data itself that is separated from the video data may be used, or voice data with some modifications may be used. The control unit 42 generates the control data of the avatar V1, the avatar V2, and the avatar V3 by combining non-verbal behavior data indicating the determined patterns of the avatar V1, the avatar V2, and the avatar V3, with the voice data of the user U1, the user U2, and the user U3.

The server 40 includes the storage unit 43. The storage unit 43 is a unit that stores information required for the control of the server 40. In FIG. 3, a server program 43P, received data 43S, and a learned model 43L are exemplified as the information to be stored in the storage unit 43. The server program 43P is a program for operating the server 40, and operates the computer such that the control by the control unit 42 or the like is executed. Since the system 100 is the communication assistance system, the server program 43P can also be referred to as the communication assistance program. The received data 43S is data that is sent to the server 40 from the terminal 10, the terminal 20, and the terminal 30, and is capable of including the video data of the user U1, the user U2, and the user U3. The learned model 43L will be described below.

Here, in a case where the control data of the avatar V1 is generated on the basis of the video data of the user U1, the following problem may occur. As described above, the video data of the user U1 includes the voice data and the image data of the user U1, but the image data has comparatively large capacity, and thus, there may be the deficiency of the image information in the image data that is sent to the server 40 from the terminal 10, in accordance with a communication situation between the terminal 10, the network N, and the server 40, or the like. For example, as described above, in general, each of the plurality of unit frames configuring the image data includes the image information. However, a state in which the image information is not included in at least one unit frame in the plurality of unit frames (frame dropping) may occur. In addition, image information of a part of the body of the user U1, in particular, a part of the upper body (a part of the face or the like) may be deficient in at least one unit frame, in accordance with a usage condition of the terminal 10 or the like. In a case where there is such a deficiency of the image information, the non-verbal behavior of the user U1 is not sufficiently represented in the image data, and it is difficult to suitably generate the control data of the avatar V1. For example, the movement of the avatar V1 stops when the frame dropping occurs. When there is no image information of a part of the face of the user U1, the facial expression of the avatar V1 is not capable of being suitably controlled. The same applies to a case where there is the deficiency of the image information in the image data of the user U2 and the image data of the user U3. Hereinafter, the state in which "there is the deficiency of the image information in the image data of the user" may be referred to as "there is the deficiency in the image data of the user".

In this embodiment, even in a case where there is the deficiency in the image data as described above, the control unit 42 of the server 40 suitably generates the control data of the avatar V1, the avatar V2, and the avatar V3. Accordingly, the control unit 42 estimates the movement of the user U1 when there is the deficiency in the image data of the user U1 by using the learned model 43L, and generates the control data of the avatar V1. Specifically, the control unit 42 acquires (an estimation result of) movement information of the avatar V1 by inputting the voice data of the user U1 to the learned model 43L, and generates the control data of the avatar V1, on the basis of the acquired movement information. Similarly, in a case where there is the deficiency in the image data of the user U2, the control unit 42 generates the control data of the avatar V2 by using the voice data of the user U2 and the learned model 43L. In a case where there is the deficiency in the image data of the user U3, the control unit 42 generates the control data of the avatar V3 by using the voice data of the user U3 and the learned model 43L.

In a case where the learned model 43L is used as described above, the learned model 43L may be generated by using training data such that the control data (the movement information) of the avatar V1 is output when the voice data of the user U1 is input. The training data may be supervised training data, or may be unsupervised training data. In the case of the supervised training data, the training data may be a teacher data group in which images and verbal behaviors of various people are associated with each other. A learned model customized to each of the users may be generated by using the teacher data group corresponding to each of the user U1, the user U2, and the user U3.

In one embodiment, in a case where there is the deficiency of the image information in the image data, the control unit 42 may generate the control data of the avatar V1 by inputting at least a part of the image data of the user U1 and the voice data of the user U1 to the learned model 43L. Examples of the image data of the user U1 that is input to the learned model 43L include data of a state in which there is no deficiency of the image information in the image data of the user U1, for example, at least one unit frame of the plurality of unit frames configuring the image data of the user U1 before there is the deficiency or after there is no deficiency.

In a case where the learned model 43L is used as described above (in a case where there is the deficiency of the image information in the image data), the learned model 43L may be generated by using the training data such that the control data including the movement information of the avatar V1 is output when at least a part of the image data (for example, image data that has been previously (for example, recently) received, in which there is no deficiency of the image information) of the user U1 and the voice data of the user U1 are input. Examples of such a learned model 43L include a Generative Adversarial Network (GAN) model. In the case of using the GAN model, the movement of the user U1 according to the voice data of the user U1 is expressed (estimated) by using the image of the user U1. As a method for generating the learned model such as the GAN model, various methods are known, and thus, here, one example will be simply described. The GAN model includes an image generator and a discriminator. In order to train the image generator and the discriminator, first, consecutive unit frames (hereinafter, referred to as "consecutive unit frames for training"), consecutive voice data items corresponding to the consecutive unit frames for training (hereinafter, referred to as "consecutive voice data items for training"), and one unit frame in the consecutive unit frames for training (hereinafter, referred to as a "unit frame for training") are prepared. Among them, the consecutive voice data items for training and the unit frames for training are input to the image generator. The image generator generates consecutive unit frames from the input data. The consecutive unit frames generated by the image generator and the consecutive unit frames for training are input to the discriminator. The discriminator discriminates (determines) whether or not the consecutive unit frames generated by the image generator are correct, that is, whether or not the consecutive unit frames are identical or similar to the consecutive unit frames for training. By using the GAN model trained as described above, the consecutive unit frames (that is, the image data) corresponding to the consecutive voice data items can be estimated from the voice data and at least one unit frame. An analysis result of the estimated image data is reflected in the control data of the user U1.

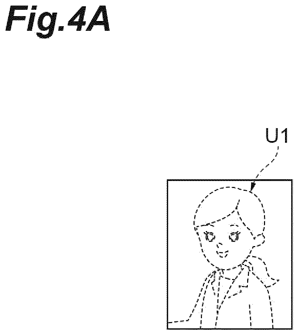

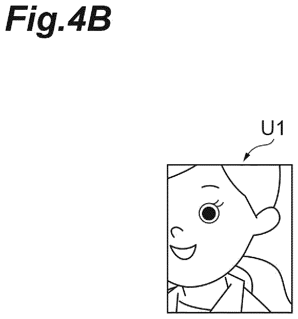

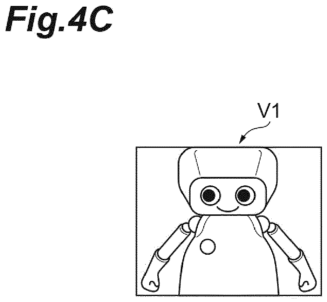

By using the learned model 43L as described above, the control unit 42 generates the control data of the avatar V1 corresponding to when there is the deficiency (a deficiency period), and continues the movement of the avatar V1 even in a case where there is the deficiency in the image data of the user U1. For example, even in a case where the entire image of the user U1 corresponding to a predetermined frame (for example, an image represented by a broken line) is deficient as illustrated in FIG. 4A or even in a case where the image data of a part of the face of the user U1 is deficient in the image of the user U1 corresponding to the predetermined frame as illustrated in FIG. 4B, the movement of the avatar V1 is continued as illustrated in FIG. 4C. In FIG. 4A, the image of the user U1 to be included as the image data is represented by the broken line. In other words, the image represented by the broken line indicates that the image is not included in the image data.

In addition, even though it is not as frequent as the deficiency in the image data, there may be a deficiency such as the voice dropping in the voice data of the user U1. Even in a case where there is the deficiency in the voice data, the control unit 42 suitably generates the control data of the avatar V1, the avatar V2, and the avatar V3. Accordingly, in a case where there is the deficiency in the voice data of the user U1, the control unit 42 supplements the deficient voice data. The learned model 43L may be used in the supplement of the voice data. As an example of a supplement method, a method is known in which a phoneme piece sequence of a broken section is estimated from verbal information items and acoustic information items before and after the broken section by voice recognition based on a "missing feature theory", voice synthesis is performed on the basis of the estimated phoneme piece sequence, and a voice waveform of the broken section is generated and interpolated. "Generating text via adversarial training" focusing on approximation to the output of LSTM through a smooth approximation method is also known in which a long short term memory (LSTM) is used as a generator of GAN. "Sequence generative adversarial nets (SeqGAN) with policy gradient" is also known in which policy gradient of reinforcement learning is learned with a framework of GAN, and a sequence of text, music, or the like is generated.

The server 40 includes a communication unit 44. The communication unit 44 is a unit that communicates with an external device of the server 40 through the network N (FIG. 1). Examples of the external device of the server 40 include the terminal 10, the terminal 20, and the terminal 30. The communication unit 44 receives the video data of the user U1, the video data of the user U2, and the video data of the user U3 from the terminal 10, the terminal 20, and the terminal 30, respectively, or transmits control data of an agent A, the control data of the avatar V1, the control data of the avatar V2, and the control data of the avatar V3, which are generated by the control unit 42, to the terminal 10, the terminal 20, and the terminal 30, respectively.

An example of a hardware configuration relevant to each function unit of the terminal 10 and the server 40 will be described. The communication unit 44 of the server 40 is capable of including a network card or a wireless communication device to be capable of accessing the network N. The control unit 42 of the server 40 can be configured by including a processor such as a central processing unit (CPU) and a graphics processing unit (GPU). The control unit 42 may be configured by further using a clock and a built-in memory along with the processor. The control unit 42 may be configured as one hardware (system on a chip (SoC)) in which the processor, the clock, the built-in memory, the storage unit 43, and the communication unit 44 are integrated. The control unit 42 operates a server computer as the server 40 by operating on the basis of the server program 43P. The storage unit 43 of the server 40 can be configured by using a non-volatile storage medium such as a flash memory, a hard disk, and a solid state disk (SSD).

The input unit 11 of the terminal 10 can be configured by using a microphone, a camera, and the like. The voice of the user U1 is acquired by the microphone. The image of the user U1 is acquired by the camera. Further, the input unit 11 may be configured by also using a manipulation device such as a keyboard, a mouse, and a touch panel. The control unit 12 of the terminal 10 can be configured as with the control unit 42 of the server 40. The control unit 12 operates a general-purpose computer as the terminal 10 by operating on the basis of the terminal program 13P. The storage unit 13 of the terminal 10 can be configured as with the storage unit 43 of the server 40. The communication unit 14 of the terminal 10 can be configured as with the communication unit 44 of the server 40. The output unit 15 of the terminal 10 can be configured by using a display device such as a liquid crystal panel and an organic EL panel (may be a touch panel). Further, the output unit 15 may be configured by also using a speaker.

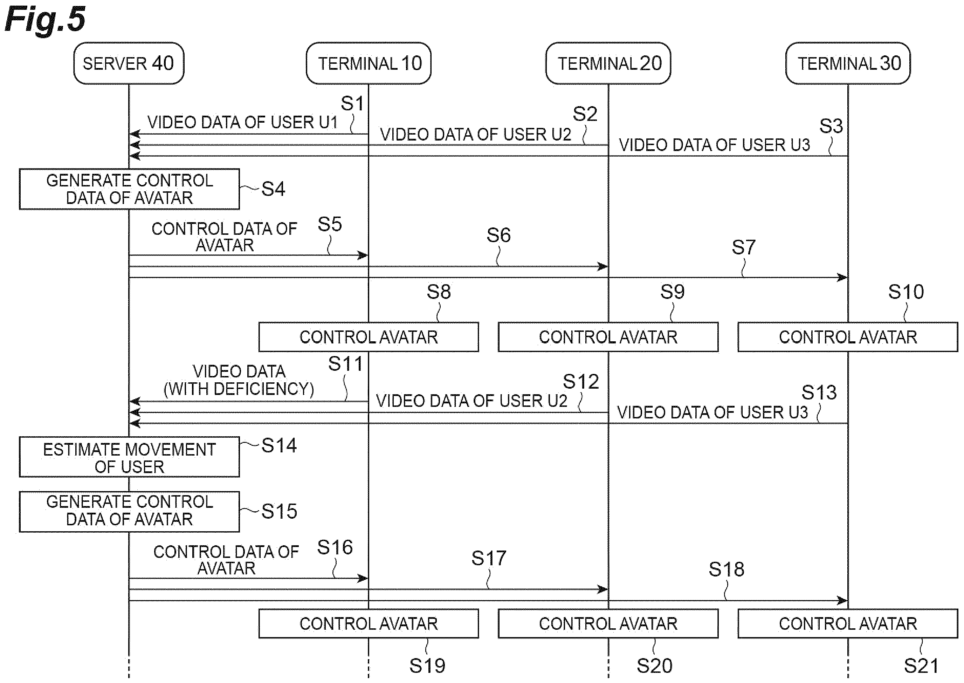

FIG. 5 is a sequence diagram illustrating an example of processing to be executed in the system 100. The processing illustrated in FIG. 5 can be repeatedly executed while the communication is continued.

In step S1 to step S3, the video data of the user is transmitted to the server 40. Specifically, in step S1, the terminal 10 transmits the video data of the user U1 to the server 40. In step S2, the terminal 20 transmits the video data of the user U2 to the server 40. In step S3, the terminal 30 transmits the video data of the user U3 to the server 40. Such data is stored in the storage unit 43 of the server 40 as the received data 43S.

In step S4, the control data of the avatar is generated. Specifically, the control unit 42 of the server 40 generates the control data of the avatar V1 on the basis of the video data of the user U1 that is received in step S1 described above, generates the control data of the avatar V2 on the basis of the video data of the user U2 that is received in step S2 described above, and generates the control data of the avatar V3 on the basis of the video data of the user U3 that is received in step S3 described above.

In step S5 to step S7, the control data of the avatar is transmitted. Specifically, in step S5, the server 40 transmits the control data of the avatar V1, the avatar V2, and the avatar V3, which is generated in step S4 described above, to the terminal 10. In step S6, the server 40 transmits the control data to the terminal 20. In step S7, the server 40 transmits the control data to the terminal 30.

In step S8 to step S10, the avatar is controlled. Specifically, in step S8, the terminal 10 controls the avatar V1, the avatar V2, and the avatar V3, on the basis of the control data of the avatar V1, the avatar V2, and the avatar V3, which is received in step S5 described above. Accordingly, the avatar V1, the avatar V2, and the avatar V3 in the virtual space 50 displayed on the terminal 10 are moved to reflect the movement of the user U1, the user U2, and the user U3. In step S9, the terminal 20 controls the avatar V1, the avatar V2, and the avatar V3, on the basis of the control data of the avatar V1, the avatar V2, and the avatar V3, which is received in step S6 described above. Accordingly, the avatar V1, the avatar V2, and the avatar V3 in the virtual space 50 displayed on the terminal 20 are moved to reflect the movement of the user U1, the user U2, and the user U3. In step S10, the terminal 30 controls the avatar V1, the avatar V2, and the avatar V3, on the basis of the control data of the avatar V1, the avatar V2, and the avatar V3, which is received in step S7 described above. Accordingly, the avatar V1, the avatar V2, and the avatar V3 in the virtual space 50 displayed on the terminal 30 are moved to reflect the movement of the user U1, the user U2, and the user U3.

Step S11 to step S13 are different from step S1 to step S3 described above in that there is the deficiency described above in the video data (the image data or the like) of the user U1. That is, in step S11, the terminal 10 transmits the video data of the user U1 in which there is the deficiency to the server 40. In step S12, the terminal 20 transmits the video data of the user U2 to the server 40. In step S13, the terminal 30 transmits the video data of the user U3 to the server 40. Such data is stored in the storage unit 43 of the server 40 as the received data 43S.

In step S14, the movement of the user is estimated. That is, there is the deficiency in the video data of the user U1 that has been sent to the server 40 from the terminal 10 in step S11 described above. Therefore, as described above, the control unit 42 estimates the movement of the user U1 when there is no deficiency by using the learned model 43L.

In step S15, the control data of the avatar is generated. Here, the control data of the avatar V1 of the user U1 is generated on the basis of the estimation result of the user U1 that is estimated in step S14 described above. The control data of the avatar V2 and the control data of the avatar V3 are generated on the basis of the video data of the user U2 and the video data of the user U3.

Step S16 to step S21 are identical to step S5 to step S10 described above, the control data of the avatar is transmitted, and the avatar is controlled. As described above, the processing is repeatedly executed, and thus, the avatar V1, the avatar V2, and the avatar V3 are controlled, and the communication is performed. In step S11 and step S14 described above, an example is described in which the image data of the user U1 is deficient and the movement of the user U1 is estimated, but in a case where the image data of the user U2 and the image data of the user U3 are deficient, the movement of the user U2 and the user U3 is estimated. In addition, in a case where there is the deficiency in the voice data of the user U1, as described above, the voice data is supplemented by the control unit 42, and the movement of the user U1 is estimated, and then, the control data of the avatar V1 is generated. The same applies to a case where the voice data of the user U2 and the voice data of the user U3 are deficient.

The system 100 described above, for example, is specified as follows. That is, the system 100 assists the communication that is performed by the users U1, U2, and U3 (hereinafter, referred to as the "user U1 and the like") using the terminal 10, the terminal 20, and the terminal 30 (hereinafter, referred to as the "terminal 10 and the like"). The control unit (the control data generating unit) 42 (may include cooperation with the control unit 12) generates control data for controlling the movement of the avatar V1, the avatar V2, and the avatar V3 (hereinafter, referred to as the "avatar V1 and the like") of the user U1 and the like that are displayed on the terminal 10 and the like and participate in the communication, on the basis of the video data including the voice data of the user U1 and the like and the image data of the user U1 and the like. In a case where there is the deficiency of the image information in the image data of the user U1 and the like, the control unit 42 supplements the deficient image information by using the voice data of the user U1 and the like and the learned model 43L. The learned model 43L is generated by using the training data such that the control data of the avatar V1 and the like is output when the voice data of the user U1 and the like is input.

The system 100 can be attained by the terminal program 13P and the server program 43P (the communication assistance program) operating the computer as the system 100.

According to the system 100, even in a case where there is the deficiency of the image information in the image data of the user U1 and the like, the movement of the avatar V1 and the like can be continued.

The learned model 43L may be generated by using at least a part of the image data of the user U1 and the like, the voice data of the user U1 and the like, and the training data such that the image data of the user U1 and the like that is supplemented with the image information corresponding to the deficiency is output. In a case where there is the deficiency of the image information in the image data of the user U1 and the like, the control unit 42 may generate the control data for controlling the avatar V1 and the like by using at least a part of the image data of the user U1 and the like, the voice data of the user U1 and the like, and the learned model 43L. For example, even in a case where there is the deficiency of the image information in the image data of the user U1 and the like, the avatar V1 and the like can be controlled.

The deficiency of the image information may indicate the state in which the image information is not included in at least one unit frame. Accordingly, even in a case where there is no image information in the unit frame, the avatar V1 and the like can be controlled.

The deficiency of the image information may be the deficiency of the image information of a part of the face of the user U1 and the like. The control data may include control data for controlling the facial expression of the avatar V1 and the like. Accordingly, even in a case where there is no image information of a part of the face of the user U1 and the like, the facial expression of the avatar can be controlled.

In a case where there is the deficiency in the voice data of the user U1 and the like, the control unit 42 may supplement the deficient voice data. Accordingly, even in a case where the voice data is deficient, the movement of the avatar V1 and the like can be continued.

The present disclosure is not limited to the embodiment described above. For example, in the embodiment described above, an example has been described in which the avatar V1, the avatar V2, and the avatar V3 appear in the virtual space 50. However, the own avatar of the user may not appear in the virtual space 50. In this case, in the virtual space 50 displayed on the terminal 10 of the user U1, the avatar V2 and the avatar V3 appear, but the avatar V1 does not appear. The non-verbal movement (the visual line movement or the like) of the avatar V2 and the avatar V3 may be controlled such that the non-verbal movement is a movement with respect to the user U1 looking at the virtual space 50 displayed on the terminal 10. In the virtual space 50 displayed on the terminal 20 of the user U2, the avatar V1 and the avatar V3 appear, but the avatar V2 does not appear. The non-verbal movement of the avatar V1 and the avatar V3 may be controlled such that the non-verbal movement is a movement with respect to the user U2 looking at the virtual space 50 displayed on the terminal 20. In the virtual space 50 displayed on the terminal 30 of the user U3, the avatar V1 and the avatar V2 appear, but the avatar V3 does not appear. The non-verbal movement of the avatar V2 and the avatar V3 may be controlled such that the non-verbal movement is a movement with respect to the user U3 looking at the virtual space 50 displayed on the terminal 30.

### Reference Signs List

10, 20, 30: terminal, 11: input unit, 12: control unit, 42: control unit (control data generating unit), 13: storage unit, 13P: terminal program (communication assistance program), 14: communication unit, 15: output unit, 40: server, 43: storage unit, 43L: learned model, 43P: server program (communication assistance program), 43S: received data, 50: virtual space, 100: system (communication assistance system), U1, U2, U3: user, V1, V2, V3: avatar.

## Claims

1. A communication assistance system assisting communication performed by a user using a terminal, the system comprising:
a control data generating unit configured to generate control data for controlling a movement of an avatar of the user that is displayed on the terminal and participates in the communication, based on video data including voice data of the user and image data of the user,
wherein when there is a deficiency of image information in the image data of the user, the control data generating unit supplements a deficient image information by using the voice data of the user and a learned model, and
the learned model is a learned model generated by using training data such that the control data of the avatar is output when the voice data of the user is input.

2. The communication assistance system according to claim 1,
wherein the learned model is a learned model generated by using at least a part of the image data of the user, the voice data of the user, and training data so as to output the image data of the user in which the image information corresponding to the deficiency is supplemented, and
when there is the deficiency of the image information in the image data of the user, the control data generating unit generates the control data for controlling the avatar by using at least a part of the image data of the user, the voice data of the user, and the learned model.

3. The communication assistance system according to claim 1 or 2,
wherein the deficiency of the image information indicates a state in which the image information is not included in at least one unit frame.

4. The communication assistance system according to claim 1 or 2,
wherein the deficiency of the image information is a deficiency of image information of a part of a face of the user, and
the control data includes control data for controlling a facial expression of the avatar.

5. The communication assistance system according to any one of claims 1 to 4,
wherein when there is a deficiency in the voice data of the user, the control data generating unit supplements a deficient voice data.

6. A communication assistance program for allowing a computer to function as the communication assistance system according to claim 1.
